# EUROPÄISCHE PATENTSCHRIFT

(11) **EP 4 520 551 B1**
(45) Veröffentlichungstag und Bekanntmachung des Hinweises auf die Patenterteilung: **29.04.2026**
(21) Anmeldenummer: 24196877.5
(22) Anmeldetag: 28.08.2024
(51) Int. Cl.: B60C 11/13, B60C 11/03

(54) **LAUFSTREIFEN FÜR EINEN FAHRZEUGREIFEN UND FAHRZEUGREIFEN MIT WINTEREIGNUNG**
TREAD FOR A VEHICLE TYRE AND VEHICLE TYRE WITH WINTER SUITABILITY
BANDE DE ROULEMENT POUR PNEU DE VÉHICULE ET PNEU DE VÉHICULE ADAPTÉ À L'HIVER

(30) Priorität: 07.09.2023 DE 102023208653
(43) Veröffentlichungstag der Anmeldung: 12.03.2025
(73) Patentinhaber: Continental Reifen Deutschland GmbH, 30175 Hannover (DE)
(72) Erfinder: Özüduru, Ahmet, 30175 Hannover (DE); Wiese, Klaus, 30175 Hannover (DE); Soyyuece, Atakan, 30175 Hannover (DE); Ecke, Stefan, 30175 Hannover (DE)
(74) Vertreter: Continental Corporation

(56) Entgegenhaltungen:
- EP-A1- 3 216 626
- WO-A1-2019/004414
- JP-A- 2010 030 596
- KR-A- 20180 086 717
- US-A1- 2014 060 717

## Beschreibung

Die Erfindung betrifft einen Laufstreifen für einen Fahrzeugreifen, wobei in dem Laufstreifen wenigstens eine Quer- oder Schrägrille mit einer ersten Rillenflanke und einer zweiten Rillenflanke ausgebildet ist, wobei wenigstens an dieser ersten Rillenflanke ein Vorsprung ausgebildet ist.

In Hinblick auf eine gute Wintereignung eines Reifenprofils sind zwei Mechanismen hervorzuheben. Zum einen kann sich vorteilhafte Schnee-Schnee-Reibung zwischen in dem Profil gehaltenem Schnee und einer Schneedecke auf einer Fahrbahn entfalten. Zum anderen kann ein vorteilhaftes Fräsverhalten zum Tragen kommen, welches insbesondere an den Einlaufkanten von Profilblöcken auftreten kann, wenn diese in eine Bodenaufstandsfläche eindrehen. Es gelingt häufig nicht, beide Mechanismen auf einem hohen Level wirken zu lassen. Dies gilt insbesondere für einen Betriebszustand, in welchem der Fahrzeugreifen im Schnee durchdreht: Hierbei wird Schnee, insbesondere in üblichen Querrillen, so verdichtet und versteift, dass er sich nicht mehr löst, was wiederum bedingt, dass die einlaufende Kante eines angrenzenden Profilblocks so mit Schnee blockiert ist, dass sie kein oder zumindest ein stark verringertes Fräsverhalten aufweist.

Aus dem Stand der Technik sind Beispiele bekannt, gemäß denen das Ansammeln von Schnee in eine Profilrille begünstigt werden soll, um Schnee-Schnee-Reibung zu ermöglichen, und weiterhin auch solche Beispiele, mit denen das Auslösen von Schnee aus einer Profilrille erleichtert werden soll. CN 1211219 C beschreibt einen Fahrzeugreifen mit einem Laufstreifen, umfassend mehrere zwischen wenigstens zwei Umfangsrillen und zwei die Umfangsrillen verbindenden Querrillen definierte Blöcke, wobei jeder Block an der Lauffläche eine Kante aufweist, die in eine Querrille hineinragt, sodass ein Zwischenraum zu einer Wand der Querrille definiert wird. Hierdurch soll die Ansammlung von Schnee und Eis in der Querrille begünstigt werden. JP 2005324685 A beschreibt einen Ganzjahresreifen, in welchem eine Vielzahl Vorsprünge an der Wand einer Querrille ausgebildet sind und wobei eine zurückversetzte Rille an einer Unterseite der Wand entlang einer Längserstreckung der Querrille ausgebildet ist. Durch diese Kombination soll eine verbesserte Schneeeignung sowohl mit verbesserter Schneesäulen-Scherkraft als auch mit verbesserter Schneeentfernung erreicht werden, ohne die Fahreigenschaften auf trockener Straße zu verschlechtern.

JP 2010030596 A beschreibt einen Reifen mit einem Profilblock, wobei ein oder mehrere Vorsprünge umlaufend an der gesamten Blockflanke ausgebildet sind. WO 2019/004414 A1 beschreibt einen Reifen mit einem Profilblock, an dessen Flanke ein in eine Rille hineinragender Vorsprung ausgebildet ist.

US 2014/060717 A1 beschreibt einen Reifen mit einer zwischen zwei Blöcken ausgebildeten Rille, wobei in der Rille ein durchbrochener Steg ausgebildet ist. EP 3216626 A1 beschreibt einen Reifen mit Rillen, wobei an gegenüberliegenden Rillenflanken Vorsprünge ausgebildet sind. KR 20180086717 A beschreibt einen Reifen mit Vorsprüngen und einer Fase.

Der Erfindung liegt die Aufgabe zugrunde, einen Laufstreifen für einen Fahrzeugreifen bzw. einen Fahrzeugreifen mit verbesserter Schneeperformance zu schaffen, wobei insbesondere ein vorteilhafter Kompromiss zwischen guter Schnee-Schnee-Reibung und starkem Fräsverhalten erzielt werden soll.

Die gestellte Aufgabe wird erfindungsgemäß mit den Merkmalen des unabhängigen Anspruchs gelöst. Eines dieser Merkmale besteht darin, dass der Vorsprung mit einem radial äußeren Ende in einem Abstand zwischen 5% und 30% einer Tiefe der Quer- oder Schrägrille von einer radial äußeren Basisfläche des Laufstreifens entfernt angeordnet ist.

Die Erfindung erkennt, dass es für ein gutes Fräsverhalten ausreichen kann, einen radial obersten Abschnitt einer Profilrille von Schnee zu befreien. Der erfindungsgemäß angeordnete Vorsprung ist dazu geeignet, eine radial oberhalb des Vorsprungs angeordnete Schneeschicht von einem radial unterhalb des Vorsprungs in der Profilrille angeordneten Schneereservoir zu trennen. Die obere Schneeschicht kann daraufhin aus der Profilrille herausfallen, sodass an die Profilrille angrenzende Profilblockkanten freigelegt werden, um sich in einen winterlichen Untergrund fräsen und somit eine Traktion erhöhen zu können. Gleichzeitig bleibt radial unterhalb des Vorsprungs ein Schneereservoir erhalten, sodass sich die Profilrille, nachdem die beim Einlaufen in die Bodenaufstandsfläche zunächst freiliegende Profilblockkante eine vorteilhafte Fräswirkung entfalten konnte, wieder vollständig mit Schnee füllen kann, um beim weiteren Durchlaufen der Bodenaufstandsfläche für vorteilhafte Schnee-Schnee-Reibung zu sorgen.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeugreifen angebrachten Laufstreifen bzw. den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. **In** Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einem Reifenäquator, einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Laufstreifens verlaufen. Die Basisfläche fällt zusammen mit jener glatten Oberfläche, welche der Laufstreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner als eine maximale Profiltiefe in dem Fahrzeugreifen ist. Die Basisfläche bleibt konkret überall dort physisch erhalten, wo keine solchen Profilelemente vorgesehen sind.

Die erhaltenen Abschnitte der Basisfläche können wenigstens teilweise für einen Kontakt mit einem Fahrbahnuntergrund bestimmt sein und dort mit einer Lauffläche des Laufstreifens zusammenfallen. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der Schneekante weiter.

Alle beschriebenen Merkmale beziehen sich insbesondere auf einen Neuzustand des Laufstreifens. Die mit den Merkmalen des Hauptanspruchs erzielten Effekte können durch bevorzugte Ausführungsformen und Ausgestaltungen unterstützt und weiter verstärkt werden.

Der Abstand zwischen dem radial äußeren Ende des Vorsprungs und der Basisfläche des Laufstreifens ist senkrecht zur Basisfläche zu ermitteln. In einer bevorzugten Ausführungsform ist der Vorsprung mit einem radial äußeren Ende in einem Abstand zwischen 1 mm und 3 mm von der Basisfläche des Laufstreifens entfernt angeordnet. In diesem radialen Bereich lässt sich ein besonders guter Kompromiss zwischen einem schneefreien oberen radialen Bereich für ein gutes Fräsverhalten und einem mit Schnee gefüllten unteren radialen Bereich als Reservoir für Schnee-Schnee-Reibung erzielen.

Der Vorsprung kann zwischen 0,3 mm und 1,5 mm, vorzugsweise zwischen 0,5 mm und 1,0 mm über der ersten Rillenflanke erhaben sein. Dieser Abstand kann senkrecht zu einer solchen imaginären Fläche gemessen werden, welche in Abwesenheit des Vorsprungs, anstelle des Vorsprungs an der ersten Rillenflanke liegen würde.

Das radial äußere Ende des Vorsprungs und ein radial inneres Ende des Vorsprungs können zwischen 0,6 mm und 3 mm, vorzugsweise zwischen 1 mm und 2 mm voneinander beabstandet sein. Vorzugsweise liegen das radial äußere Ende und das radial innere Ende des Vorsprungs an Berührungspunkten mit der ersten Rillenflanke bzw. an den radialen Enden der imaginären Fläche, welche in Abwesenheit des Vorsprungs, anstelle des Vorsprungs an der ersten Rillenflanke liegen würde. Wenn die erste Rillenflanke in radialer Richtung verläuft, wie es beispielsweise bei einer U-Rille der Fall wäre, wird der Abstand zwischen radial innerem und äußerem Ende des Vorsprungs entlang der Radialrichtung gemessen. Wenn die erste Rillenflanke gegenüber der Radialrichtung geneigt verläuft, wie es beispielsweise bei einer V-Rille der Fall wäre, ist der Abstand entlang einer entsprechend geneigten Richtung zu bestimmen.

Der Vorsprung kann in einer von der Radialrichtung und einer weiteren zur Längserstreckungsrichtung der Quer- oder Schrägrille senkrechten Richtung aufgespannten Schnittebene betrachtet werden. In einem solchen Querschnitt kann der Vorsprung durch eine von der ersten Rillenflanke fort und in die Profilrille hinein weisende konvexe Wölbung beschrieben werden. Weiterhin kann der Querschnitt des Vorsprungs knickfrei sein, also durchgehend durch wohldefinierte Tangenten beschreibbar sein. Alternativ kann der Querschnitt Knicke aufweisen, die in der Praxis mit in der Reifenherstellung üblichen Krümmungsradien verrundet sein können. Der Querschnitt des Vorsprungs kann die Form eines Kreisbogens annehmen und insbesondere halbkreisförmig von der ersten Rillenflanke abstehen. Alternativ sind komplexere Formen vorstellbar, gemäß denen der Vorsprung insbesondere nach radial unten und radial oben unterschiedlich ausgeformt und im Querschnitt asymmetrisch ausgebildet sein kann.

In einer bevorzugten Ausführungsform sind radial unterhalb des Vorsprungs keine weiteren Vorsprünge an der ersten Rillenflanke ausgebildet. Auf diese Weise ist eine klare Unterteilung in einen radial unterhalb und einen radial oberhalb des Vorsprungs angeordneten Bereich gegeben, was wiederum eine entsprechend effektive Trennung in der Profilrille angesammelten Schnees bewirken kann.

Erfindungsgemäß ist ein das Rillenvolumen vergrößernder Übergang zwischen der zweiten Rillenflanke und der Lauffläche des Laufstreifens ausgebildet. Hierdurch wird das Rillenvolumen im Vergleich zu einer Quer- oder Schrägrille ohne einen solchen Übergang vergrößert. Insbesondere kann eine Rillenbreite in einem radialen Bereich des Übergangs gegenüber einer Rillenbreite, die ohne einen solchen Übergang vorliegen würde, vergrößert sein. Auf diese Weise kann ein Halt in der Profilrille eingeschlossenen Schnees auf der radialen Höhe des Übergangs verringert und somit das Auslösen des Schnees aus der Rille begünstigt werden. Der Übergang kann insbesondere als eine Fase oder eine Schneetasche ausgeführt sein.

Eine Fase kann in einer von der Radialrichtung und einer weiteren zur Längserstreckung der Quer- oder Schrägrille senkrechten Richtung aufgespannten Querschnittsebene betrachtet durch eine gerade, gegenüber der Radialrichtung angewinkelte Linie beschrieben werden, welche einerseits in die Lauffläche und andererseits in die zweite Rillenflanke mündet. In an sich bekannter Weise kann der Winkel der Fase gegenüber der Radialrichtung beispielsweise zwischen 30° und 60° betragen.

Eine Schneetasche kann im Querschnitt beispielsweise durch einen konkaven Bogen beschreiben werden, wobei der konkave Bogen nach radial oben und zur ersten Rillenflanke hin geöffnet sein kann. Der konkave Bogen kann weiterhin durch einen radial nach oben vorstehenden Wall gegenüber der Quer- oder Schrägrille abgegrenzt sein, sodass sich am Boden der Schneetasche, zwischen der Lauffläche und der Quer- oder Schrägrille, eine radial nach oben geöffnete Rinne bildet, welche mit Schnee gefüllt werden und zu einer vorteilhaften Schnee-Schnee-Reibung beitragen kann. Der radial nach oben vorstehende Wall erstreckt sich vorzugsweise radial nicht bis an die Basisfläche sondern beschränkt sich weiter vorzugsweise auf einen radialen Bereich unterhalb des radial äußeren Endes des Vorsprungs.

Weiter alternativ sind auch konvexe Bögen und/oder Kombinationen von konvexen, konkaven und geradlinigen Abschnitten für den Querschnitt eines das Rillenvolumen vergrößernden Übergangs zwischen der zweiten Rillenflanke und der Lauffläche denkbar.

Der das Rillenvolumen vergrößernder Übergang zwischen der zweiten Rillenflanke und der Lauffläche ist vorzugsweise, entlang einer Längserstreckung der Quer- oder Schrägrille betrachtet, direkt gegenüber oder wenigstens mit einer Überschneidung zu dem Vorsprung angeordnet. Eine radiale Grenze zwischen dem Übergang und der zweiten Rillenflanke ist vorzugsweise radial nicht mehr als 20% der Tiefe der Quer- oder Schrägrille von dem radial inneren und von dem radial äußeren Ende des Vorsprungs entfernt. Dies bedeutet, dass die radiale Grenze maximal 20% der Rillentiefe von dem aus Sicht der radialen Grenze weiter entfernten der beiden radialen Enden des Vorsprungs angeordnet ist. Vorzugsweise ist die Grenze zwischen dem Übergang und der zweiten Rillenflanke auf einer solchen radialen Höhe angeordnet, die zwischen dem radial äußeren Ende des Vorsprungs und dem radial inneren Ende des Vorsprungs liegt. Auf diese Weise wird eine radial oberhalb des Vorsprungs in der Profilrille eingeschlossene Schneeschicht auf Seiten der zweiten Rillenflanke von dem Übergang begrenzt. Insgesamt wird die Schneeschicht somit auf Seiten der ersten Rillenflanke durch den Vorsprung von einem radial tiefer gelegenen Schneereservoir getrennt und hat gleichzeitig von Seiten der zweiten Rillenflanke einen verringerten Halt. Mit einer solchermaßen aufeinander abgestimmten Gestaltung beider Rillenflanken kann gezielt eine Schneeschicht einer gewünschten radialen Dicke aus der Profilrille ausgelöst werden.

In einer bevorzugten Ausführungsform ist die erste Rillenflanke an einer einlaufenden Blockkante angeordnet. Eine einlaufende Blockkante tritt bei Vorwärtsfahrt eines mit einem Profilblöcke umfassenden Fahrzeugreifen bereiften Fahrzeugs eher in eine Bodenaufstandsfläche ein als eine nachlaufende Blockkante. Der Vorsprung an der erste Rillenflanke weist in diesem Falle in Umfangsrichtung nach vorn und mit anderen Worten in jene Richtung, unter welcher sich die erste Rillenflanke in die Bodenaufstandsfläche hineindreht. Somit kann der Vorsprung in Richtung der Rollbewegung auf in der Profilrille angesammelten Schnee einwirken und diesen mechanisch besonders effektiv in zwei radiale Bereiche trennen. Zusätzlich kann ein Vorsprung auch an einer zweiten Rillenflanke angeordnet werden, wobei die zweite Rillenflanke an einer auslaufenden Blockkannte angeordnet ist. Hierdurch kann der Vorsprung bei Rückwärtsfahrt und/oder beim Bremsen in der oben beschriebenen Weise auf ein Schneereservoir einwirken.

Der Vorsprung erstreckt sich vorzugsweise über einen zusammenhängenden Abschnitt von wenigstens 5 mm entlang der ersten Rillenflanke. Durch einen entlang der Längserstreckung über einen zusammenhängenden Abschnitt verlaufenden Vorsprung kann sich die Wirkung des Vorsprungs entsprechend entfalten und Schnee kann über den gesamten zusammenhängenden Abschnitt der Profilrille ausgelöst werden.

Der Vorsprung kann sich auf einem konstanten radialen Niveau entlang der Längserstreckung der Profilrille erstrecken. Hierdurch kann eine besonders vorteilhafte radiale Anordnung über die gesamte Längserstreckung des Vorsprungs zum Tragen kommen.

Es kann vorteilhaft sein, die radiale Grenze zwischen dem das Rillenvolumen vergrößernden Übergang und der zweiten Rillenflanke entlang der Längserstreckung der Quer- oder Schrägrille in ihrer radialen Höhe veränderlich zu gestalten. In diesem Fall können sich die radiale Grenze zwischen dem Übergang und der zweiten Rillenflanke auf der einen Seite und der Vorsprung auf der anderen Seite entlang der Längserstreckung der Quer- oder Schrägrille in ihrem jeweiligen radialen Niveau qualitativ und vorzugsweise auch quantitativ übereinstimmend verändern. Eine qualitativ übereinstimmende Veränderung liegt beispielsweise dann vor, wenn sich die radiale Grenze und der Vorsprung entlang der Längserstreckung der Profilrille beide zu einem höheren radialen Niveau oder beide zu einem niedrigeren radialen Niveau verschieben. Eine quantitativ übereinstimmende Veränderung liegt dann vor, wenn die Verschiebung des radialen Niveaus je Längserstreckung zwischen der radialen Grenze und dem Vorsprung identisch ausfällt. Eine Veränderung das radialen Niveaus kann beispielsweise auch sinus- oder zickzackförmig ausfallen. In diesem Fall läge eine qualitativ übereinstimmende Veränderung bei Phasengleichheit und eine quantitativ übereinstimmente Veränderung bei zusätzlicher Amplitudengleichheit vor. Durch eine übereinstimmende Veränderung der radialen Niveaus kann die Lage des Vorsprungs an eine vorteilhaft veränderliche Lage der Grenze zwischen dem Übergang und der zweiten Rillenflanke angepasst werden, um entlang der Längserstreckung durchgehend eine vorteilhafte Abstimmung zwischen dem Vorsprung und dem Übergang zu erhalten.

Neben dem Vorsprung kann sich ein weiterer Vorsprung über einen weiteren zusammenhängenden Abschnitt entlang der ersten Rillenflanke erstrecken, wobei sich die Abschnitte entlang einer Längserstreckung der Quer- oder Schrägrille vorzugsweise nicht überlappen. Die beiden Abschnitte können entlang der Längserstreckung der Quer- oder Schrägrille zwischen 1 mm und 5 mm voneinander beabstandet sein. Neben dem Vorsprung können sich auch mehrere weitere Vorsprünge entlang der ersten Rillenflanke erstrecken. Der eine weitere oder die mehreren weiteren Vorsprünge sind vorzugsweise gemäß den vor- und/oder nachstehend beschriebenen Merkmalen eines Vorsprungs gestaltet; weiter vorzugsweise sind alle Vorsprünge in dem Laufstreifen identisch ausgestaltet. Durch den Einsatz zweier oder mehrerer Abschnitte mit erfindungsgemäßen Vorsprüngen kann die erfindungsgemäße Wirkung entsprechend über den Laufstreifen verteilt und abschnittsweise gezielt dosiert werden: In Bereichen ohne Vorsprung an einer Rillenflanke kann mehr Schnee in den Profilrillen verbleiben, sodass hier eine besonders gute Schnee-Schnee-Reibung erzielt wird; in Bereichen mit Vorsprung kann der Fräseffekt erfindungsgemäß freigelegter Blockkanten überwiegen.

Bei der Quer- oder Schrägrille kann es sich um eine zwischen einer ersten Reifenschulter und einer Reifenäquatorgegend verlaufende Schrägrille handeln. Diese Schrägrille kann zusammen mit einer weiteren Schrägrille eine den Laufstreifen von der ersten Reifenschulter bis zu einer zweiten Reifeschulter axial überspannende V-Form beschreiben. V-förmige Profilmuster sind insbesondere für Winter- und Ganzjahresreifen an sich bekannt, wobei die Spitze des V direkt am Reifenäquator oder um wenige Prozent der axialen Laufstreifenbreite verschoben angeordnet sein kann. Der Einsatz eines erfindungsgemäßen Vorsprungs in einem solchen Reifenprofil bietet sich wegen der dem Vorsprung und dem V-Muster gemeinsamen generellen Wintereignung an. Weiterhin ist der Vorsprung gemäß einigen der vor- und/oder nachstehend beschriebenen Ausführungsformen vorzugsweise an einem laufrichtungsgebundenen Fahrzeugreifen einzusetzen, wobei auch V-förmige Rillenanordnungen in der Regel für einen laufrichtungsgebundenen Einsatz konzipiert sind.

Der Vorsprung kann in einem axial zentralen Abschnitt des Laufstreifes angeordnet sein, also einem Abschnitt, der um einen Reifenäquator zentriert ist. Der axial zentrale Abschnitt kann in einem Bereich von 50% der Breite der Bodenaufstandsfläche definiert sein, wobei die Bodenaufstandsfläche dem statisch ermittelten Footprint bei einer Last von 70 % der maximalen Tragfähigkeit bei einem Innendruck von 85 %, ermittelt gemäß E.T.R.T.O.-Standards entsprechen kann. In diesem Bereich des Laufstreifens kommt es zu einer besonders starken Verdichtung von Schnee in den Profilrillen, sodass ein erfindungsgemäßes Freilegen von Blockkanten von besonderer Bedeutung sein kann.

Die Erfindung betrifft außerdem einen Fahrzeugreifen mit einem vor- und/oder nachstehend beschriebenen Laufstreifen. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

Die Erfindung wird nachfolgend unter Bezugnahme auf die beigefügten Zeichnungen anhand vorteilhafter Ausführungsformen beispielhaft beschrieben. Es zeigen:
Figur 1 schematisch und ausschnittsweise eine Draufsicht auf eine Ausführungsform eines erfindungsgemäßen Laufstreifens,
Figur 2 schematisch und ausschnittsweise eine seitliche Schnittansicht einer Ausführungsform eines erfindungsgemäßen Fahrzeugreifens,
Figur 3 schematisch eine vergrößerte Ansicht einer in Figur 2 gezeigten Schrägrille,
Figur 4 schematisch eine Schnittansicht einer alternativen Ausführungsform einer erfindungsgemäßen Profilrille,
Figur 5 schematisch eine Schnittansicht einer weiteren alternativen Ausführungsform einer erfindungsgemäßen Profilrille.

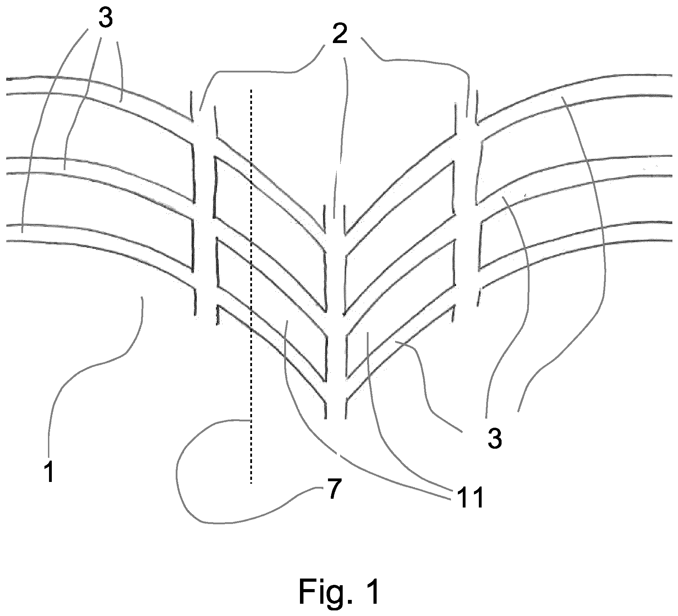

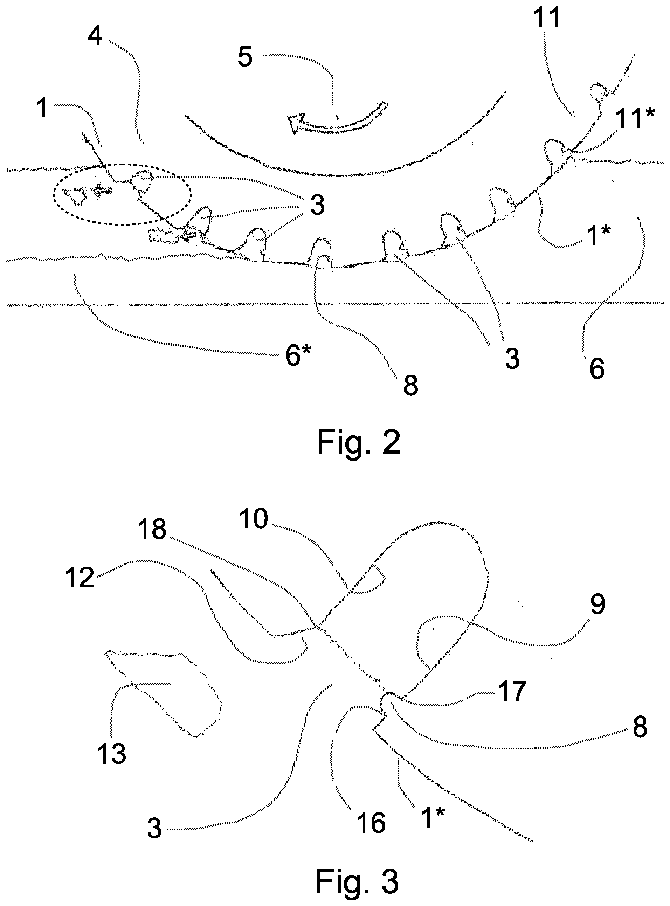

Figur 1 zeigt stark vereinfacht einen Abschnitt eines Laufstreifens 1, wobei eine Axialrichtung in der Zeichnungsebene von links nach rechts und eines Umfangsrichtung von oben nach unten dargestellt ist. Axial zentral sowie axial zu beiden Seiten versetzt verlaufen drei Umfangsrillen 2. V-förmig vom axialen Zentrum nach axial außen verlaufen Schrägrillen 3 durch den Laufstreifen 1. Zwischen den Umfangsrillen 2 und Schrägrillen 3 werden Profilblöcke 11 definiert. In einem axial inneren Bereich, zwischen jeweils zwei Umfangsrillen 2 kann eine erfindungsgemäße Ausgestaltung der Rillenflanken 9, 10 vorgesehen sein. Dies wird anhand einer Schnittansicht gemäß Schnittebene 7 in Figur 2 veranschaulicht, wobei die Schnittebene 7 von der gestrichelten Linie in Figur 1 und der zur Zeichnungsebene senkrechten Radialrichtung aufgespannt wird.

Figur 2 zeigt in einer Schnittansicht einen radial unteren Teil eines Fahrzeugreifens 4, der sich bei Vorwärtsfahrt eines nicht dargestellten Fahrzeugs entlang einer Drehrichtung 5 bzw. in Umfangsrichtung dreht. Der Fahrzeugreifen 4 rollt hierbei auf einer Schneedecke 6 ab bzw. sinkt teilweise in diese Schneedecke 6 ein und hinterlässt eine Schicht eingedrückten Schnees 6*. Über den Umfang des Fahrzeugreifens 4 verteilt sind Querschnitte von im Wesentlichen identisch zueinander ausgeführten Schrägrillen 3 zu sehen. Die Schrägrillen 3 sind in einem gemäß Figur 1 illustrierten Laufstreifen 1 angeordnet, wobei der Laufstreifen 1, wie an sich bekannt, eine radial äußere Schicht des in Figur 2 dargestellten Fahrzeugreifens 4 ausmacht. Die Schrägrillen 3 füllen sich beim Durchlaufen der Schneedecke 6 mit Schnee. Bei einer ausreichend hohen Schneedecke 6 kann der Schnee in den Schrägrillen 3 so verdichtet werden, dass die Schrägrillen 3 während einer gesamten Umdrehung des Fahrzeugreifens radial im Wesentlichen bis an die Lauffläche 1* mit Schnee gefüllt bleiben. Hierdurch können insbesondere die einlaufenden Blockkanten 11* der Profilblöcke 11 blockiert werden, sodass ein vorteilhaftes Fräsverhalten beim Eintritt in die Schneedecke 6 unterbleibt. Zur Lösung dieses Problems sind gemäß der Erfindung Vorsprünge 8 an den ersten Rillenflanken 9 der Schrägrillen 3 vorgesehen, wie anhand von Figur 3 näher erläutert wird.

Hierzu zeigt Figur 3 eine Vergrößerung des in Figur 2 gestrichelt umrissenen Ausschnitts. An einer ersten Rillenflanke 9 ist in einem radial oberen Bereich ein Vorsprung 8 angeordnet. Ein radial äußeres Ende 16 des Vorsprungs 8 ist wenige Millimeter von der Lauffläche 1* beabstandet. Dieser Abstand gleicht in dem gezeigten Ausführungsbeispiel einem Abstand zwischen dem radial äußeren Ende 16 des Vorsprungs 8 und der Basisfläche des Laufstreifens 1, weil die erste Rillenflanke 9 in dem gezeigten Ausführungsbeispiel in Radialrichtung verläuft. Bei einer geneigten Rillenflanke 9 wäre der Abstand zwischen dem radial äußeren Ende 16 des Vorsprungs 8 und der Basisfläche gegenüber einer solchen Position in der Basisfläche zu vermessen, an welcher die Lauffläche 1* von der Rille unterbrochen wäre, die Basisfläche also nur imaginär oberhalb der Rille 3 verliefe. In dem gezeigten Querschnitt nimmt der Vorsprung 8 die Form eines sich zwischen dem radial äußeren Ende 16 und einem radial innere Ende 17 des Vorsprungs 8 erstreckenden Halbkreises an. Der Vorsprung 8 erstreckt sich rippenartig über einen Abschnitt entlang der Längserstreckung der Schrägrille 3, wobei der Abschnitt zwischen zwei Umfangsrillen 2 gemäß Figur 1 angeordnet sein kann. An einer der ersten Rillenflanke 9 gegenüberliegenden zweiten Rillenflanke 10 ist als Übergang 12 zur Lauffläche 1* eine Fase 12 ausgebildet. Ein radiale Grenze 18 zwischen diesem Übergang 12 und der zweiten Rillenflanke 10 ist auf einer solchen radialen Höhe angeordnet, die zwischen dem radial äußeren Ende 16 des Vorsprungs 8 und dem radial inneren Ende 17 des Vorsprungs 8 und insbesondere nahe einem am weitesten gegenüber der ersten Rillenflanke 9 erhabenen Punkt des Vorsprungs 9 gelegen ist. Wie anhand einer zwischen dem Vorsprung 8 und einem radial unteren Ende der Fase 12 quer durch die Rille 3 gezeichneten Grenzlinie illustriert, kann der Vorsprung 8, unterstützt durch die Fase 12, dazu geeignet sein, ein in der Schrägrille 3 angesammeltes Schneereservoir aufzutrennen. Hierbei wird insbesondere eine radial äußere Schneeschicht 13 abgetrennt und kann aus der Schrägrille 3 ausgelöst werden (vgl. von der Schrägrille 3 beabstandet dargestellte Schneeschicht 13).

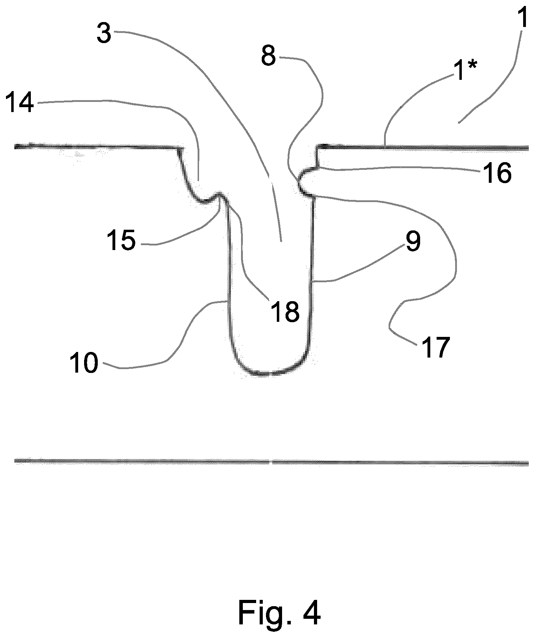

Figur 4 zeigt eine Schnittansicht einer alternativen Ausführungsform eines erfindungsgemäßen Laufstreifens 1 mit einer alternativ ausgestalteten Quer- oder Schrägrille 3. Die der Figur 4 zugrunde liegende Schnittebene wird von der Radialrichtung und einer weiteren zu einer Längserstreckung der Quer- oder Schrägrille 3 senkrechten Richtung aufgespannt. Die erste Rillenflanke 9 ist sehr ähnlich den Ausführungsformen gemäß Figuren 2 und 3, mit einem Vorsprung 8 ausgestattet. An der gegenüberliegenden zweiten Rillenflanke 10 ist im vorliegenden Ausführungsbeispiel statt einer Fase 12 eine Schneetasche 14 als Übergang 14 in die Lauffläche 1* angeordnet, wobei die Schneetasche 14 durch einen radial nach oben vorstehenden Wall 15 von der Rille 3 abgegrenzt ist. Eine radiale Grenze 18 zwischen der zweiten Rillenflanke 10 und der Schneetasche 14 kann dort definiert werden, wo die Steigung der zweiten Rillenflanke 10 beginnt, sich zu verringern.

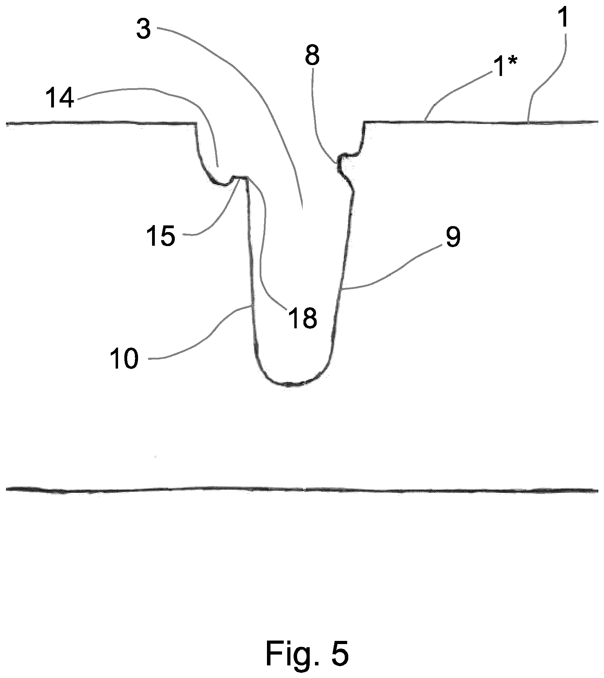

Figur 5 zeigt eine Schnittansicht einer weiteren alternativen Ausführungsform eines erfindungsgemäßen Laufstreifens 1 mit einer alternativ ausgestalteten Quer- oder Schrägrille 3. Die der Figur 5 zugrunde liegende Schnittebene wird von der Radialrichtung und einer weiteren zu einer Längserstreckung der Quer- oder Schrägrille 3 senkrechten Richtung aufgespannt. Die zweite Rillenflanke 10 ist, ähnlich der Ausführungsform gemäß Figur 4, mit einer Schneetasche 14 ausgestattet. Die gegenüberliegende ersten Rillenflanke 9 ist gegenüber der Radialrichtung stärker geneigt als die zweite Rillenflanke 10. Ein an der ersten Rillenflanke 9 angeordneter Vorsprung 8 weist einen parallel zur Radialrichtung verlaufenden Teilbereich auf und ist nach radial oben und unten verschiedenartig an die erste Rillenflanke 9 angeschlossen. Ein Vorsprung 8 mit einem Querschnitt wie gemäß der in Figur 5 gezeigten Ausführungsform ist besonders stabil und lässt sich in einer entsprechend gestalteten Reifenform besonders gut herstellen.

### Bezugszeichenliste

- 1: Laufstreifen
- 1*: Lauffläche
- 2: Umfangsrille
- 3: Quer- oder Schrägrille
- 4: Fahrzeugreifen
- 5.: Drehrichtung
- 6: Schneedecke
- 6*: eingedrückter Schnee
- 7: Schnittebene
- 8: Vorsprung
- 9: erste Rillenflanke
- 10: zweite Rillenflanke
- 11: Profilblock
- 11*: einlaufende Blockkante
- 12: das Rillenvolumen vergrößernder Übergang (Fase)
- 13: radial äußere Schneeschicht
- 14: das Rillenvolumen vergrößernder Übergang (Schneetasche)
- 15: radial nach oben vorstehender Wall
- 16: radial äußeres Ende des Vorsprungs
- 17: radial inneres Ende des Vorsprungs
- 18: radiale Grenze vom Übergang 12, 14 zur zweiten Rillenflanke 9

## Patentansprüche

1. Laufstreifen (1) für einen Fahrzeugreifen (4), wobei in dem Laufstreifen (1) wenigstens eine Quer- oder Schrägrille (3) mit einer ersten Rillenflanke (9) und einer zweiten Rillenflanke (10) ausgebildet ist, wobei wenigstens an der ersten Rillenflanke (9) ein Vorsprung (8) ausgebildet ist, wobei der Vorsprung (8) mit einem radial äußeren Ende (16) in einem Abstand zwischen 5% und 30% einer Tiefe der Quer- oder Schrägrille von einer radial äußeren Basisfläche des Laufstreifens (1) entfernt angeordnet ist,
**dadurch gekennzeichnet,**
**dass** ein das Rillenvolumen vergrößernder Übergang (12, 14) zwischen der zweiten Rillenflanke (10) und einer Lauffläche (1*) des Laufstreifens (1) ausgebildet ist.

2. Laufstreifen (1) gemäß Anspruch 1, **dadurch gekennzeichnet, dass** der Vorsprung (8) mit einem radial äußeren Ende (16) in einem Abstand zwischen 1 mm und 3 mm von einer radial äußeren Basisfläche des Laufstreifens (1) entfernt angeordnet ist.

3. Laufstreifen (1) gemäß einem der Ansprüche 1 oder 2, **dadurch gekennzeichnet, dass** der Vorsprung (8) zwischen 0,3 mm und 1,5 mm, vorzugsweise zwischen 0,5 mm und 1,0 mm gegenüber der ersten Rillenflanke (9) erhaben ist.

4. Laufstreifen (1) gemäß einem der Ansprüche 1 bis 3, **dadurch gekennzeichnet, dass** das radial äußere Ende (16) des Vorsprungs und ein radial inneres Ende des Vorsprungs (8) zwischen 0,6 mm und 3 mm, vorzugsweise zwischen 1 mm und 2 mm voneinander beabstandet sind.

5. Laufstreifen (1) gemäß einem der Ansprüche 1 bis 4, **dadurch gekennzeichnet, dass** radial unterhalb des Vorsprungs (8) keine weiteren Vorsprünge an der ersten Rillenflanke (9) ausgebildet sind.

6. Laufstreifen (1) gemäß Anspruch 1, **dadurch gekennzeichnet, dass** eine radiale Grenze (18) zwischen dem Übergang (12, 14) und der zweiten Rillenflanke (9) radial nicht mehr als 20% der Tiefe der Quer- oder Schrägrille (3) von dem radial inneren und von dem radial äußeren Ende (16, 17) des Vorsprungs (8) entfernt ist.

7. Laufstreifen (1) gemäß einem der Ansprüche 1 bis 6, **dadurch gekennzeichnet, dass** die erste Rillenflanke (9) an einer einlaufenden Blockkante (11*) angeordnet ist.

8. Laufstreifen (1) gemäß einem der Ansprüche 1 bis 7, **dadurch gekennzeichnet, dass** der Vorsprung (8) sich über einen zusammenhängenden Abschnitt von wenigstens 5 mm entlang einer Längserstreckung der Quer- oder Schrägrille (3) erstreckt.

9. Laufstreifen (1) gemäß Anspruch 8, **dadurch gekennzeichnet, dass** sich der Vorsprung (8) auf einem konstanten radialen Niveau erstreckt.

10. Laufstreifen (1) gemäß Anspruch 6 und Anspruch 8, **dadurch gekennzeichnet, dass** sich die radiale Grenze (18) zwischen dem Übergang (12, 14) und der zweiten Rillenflanke (9) auf der einen Seite und der Vorsprung (8) auf der anderen Seite entlang der Längserstreckung der Quer- oder Schrägrille (3) in ihrem jeweiligen radialen Niveau qualitativ und vorzugsweise auch quantitativ übereinstimmend verändern, wobei die Veränderung das radialen Niveaus insbesondere sinus- oder zickzackförmig ausfallen kann, in welchem Falle eine qualitativ übereinstimmende Veränderung bei Phasengleichheit und eine quantitativ übereinstimmende Veränderung bei zusätzlicher Amplitudengleichheit vorliegt.

11. Laufstreifen (1) gemäß einem der Ansprüche 8 bis 10, **dadurch gekennzeichnet, dass** sich neben dem Vorsprung (8) ein weiterer Vorsprung über einen weiteren zusammenhängenden Abschnitt entlang der ersten Rillenflanke (9) erstreckt, wobei sich die Abschnitte entlang der Längserstreckung der Quer- oder Schrägrille (3) nicht überlappen.

12. Laufstreifen (1) gemäß Anspruch 11, **dadurch gekennzeichnet, dass** die beiden Abschnitte entlang der Längserstreckung der Quer- oder Schrägrille zwischen 1 mm und 5 mm voneinander beabstandet sind.

13. Laufstreifen (1) gemäß einem der Ansprüche 1 bis 12, **dadurch gekennzeichnet, dass** die Quer- oder Schrägrille (3) eine sich zwischen einer ersten Reifenschulter und einer Reifenäquatorgegend erstreckende Schrägrille (3) ist, wobei die Schrägrille (3) zusammen mit einer weiteren Schrägrille (3) eine den Laufstreifen (1) von der ersten Reifenschulter zu einer zweiten Reifeschulter axial überspannende V-Form beschreibt.

14. Laufstreifen (1) gemäß einem der Ansprüche 1 bis 13, **dadurch gekennzeichnet, dass** der Vorsprung (8) in einem axial zentralen Abschnitt des Laufstreifes (1) angeordnet ist.

## Claims

1. Tread (1) for a vehicle tyre (4), wherein at least one transverse or oblique channel (3) with a first channel flank (9) and a second channel flank (10) is formed in the tread (1), wherein a projection (8) is formed at least on the first channel flank (9), wherein the projection (8), at a radially outer end (16), is arranged at a distance of between 5% and 30% of a depth of the transverse or oblique channel away from a radially outer base surface of the tread (1),
**characterized**
**in that** a transition (12, 14) which increases the channel volume is formed between the second channel flank (10) and a running surface (1*) of the tread (1).

2. Tread (1) according to Claim 1, **characterized in that** the projection (8), at a radially outer end (16), is arranged at a distance of between 1 mm and 3 mm away from a radially outer base surface of the tread (1).

3. Tread (1) according to either of Claims 1 and 2, **characterized in that** the projection (8) is raised by between 0.3 mm and 1.5 mm, preferably between 0.5 mm and 1.0 mm, in relation to the first channel flank (9).

4. Tread (1) according to one of Claims 1 to 3, **characterized in that** the radially outer end (16) of the projection and a radially inner end of the projection (8) are at a distance of between 0.6 mm and 3 mm, preferably between 1 mm and 2 mm, from one another.

5. Tread (1) according to one of Claims 1 to 4, **characterized in that**, radially below the projection (8), no further projections are formed on the first channel flank (9).

6. Tread (1) according to Claim 1, **characterized in that** a radial boundary (18) between the transition (12, 14) and the second channel flank (9) is radially no more than 20% of the depth of the transverse or oblique channel (3) away from the radially inner and radially outer ends (16, 17) of the projection (8).

7. Tread (1) according to one of Claims 1 to 6, **characterized in that** the first channel flank (9) is arranged on a leading block edge (11*).

8. Tread (1) according to one of Claims 1 to 7, **characterized in that** the projection (8) extends along a longitudinal extent of the transverse or oblique channel (3) over a continuous section of at least 5 mm.

9. Tread (1) according to Claim 8, **characterized in that** the projection (8) extends at a constant radial level.

10. Tread (1) according to Claim 6 and Claim 8, **characterized in that** the radial boundary (18) between the transition (12, 14) and the second channel flank (9) at the one side and the projection (8) at the other side vary along the longitudinal extent of the transverse or oblique channel (3) in a qualitatively and preferably also quantitatively corresponding manner in terms of their radial level, wherein the variation of the radial level may in particular be sinusoidal or zigzag-shaped, in which case there is a qualitatively corresponding variation for an in-phase configuration and a quantitatively corresponding variation for additional equality of amplitude.

11. Tread (1) according to one of Claims 8 to 10, **characterized in that**, in addition to the projection (8), a further projection extends along the first channel flank (9) over a further continuous section, wherein there is no overlapping of the sections along the longitudinal extent of the transverse or oblique channel (3).

12. Tread (1) according to Claim 11, **characterized in that** the two sections are at a distance of between 1 mm and 5 mm from one another along the longitudinal extent of the transverse or oblique channel.

13. Tread (1) according to one of Claims 1 to 12, **characterized in that** the transverse or oblique channel (3) is an oblique channel (3) which extends between a first tyre shoulder and a tyre-equator region, wherein the oblique channel (3) describes together with a further oblique channel (3) a V shape which axially spans the tread (1) from the first tyre shoulder to a second tyre shoulder.

14. Tread (1) according to one of Claims 1 to 13, **characterized in that** the projection (8) is arranged in an axially central section of the tread (1).

## Revendications

1. Bande de roulement (1) pour un pneumatique (4) de véhicule, au moins une rainure transversale ou oblique (3), présentant un premier flanc (9) de rainure et un second flanc (10) de rainure, étant réalisée dans la bande de roulement (1), une saillie (8) étant réalisée au moins au niveau du premier flanc (9) de rainure, la saillie (8) étant agencée avec une extrémité radialement externe (16) à une distance représentant entre 5% et 30% d'une profondeur de la rainure transversale ou oblique par rapport à une surface de base radialement externe de la bande de roulement (1),
**caractérisée**
**en ce qu'**une transition (12, 14) agrandissant le volume de la rainure est réalisée entre le second flanc (10) de rainure et une surface de roulement (1*) de la bande de roulement (1).

2. Bande de roulement (1) selon la revendication 1, **caractérisée en ce que** la saillie (8) est agencée avec une extrémité radialement externe (16) à une distance entre 1 mm et 3 mm par rapport à une surface de base radialement externe de la bande de roulement (1).

3. Bande de roulement (1) selon l'une des revendications 1 ou 2, **caractérisée en ce que** la saillie (8) est élevée d'entre 0,3 mm et 1,5 mm, de préférence d'entre 0,5 mm et 1,0 mm, par rapport au premier flanc (9) de rainure.

4. Bande de roulement (1) selon l'une des revendications 1 à 3, **caractérisée en ce que** l'extrémité radialement externe (16) de la saillie et une extrémité radialement interne de la saillie (8) sont écartées l'une de l'autre d'entre 0,6 mm et 3 mm, de préférence d'entre 1 mm et 2 mm.

5. Bande de roulement (1) selon l'une des revendications 1 à 4, **caractérisée en ce que**, radialement sous la saillie (8), aucune autre saillie n'est réalisée au niveau du premier flanc (9) de rainure.

6. Bande de roulement (1) selon la revendication 1, **caractérisée en ce que** qu'une limite radiale (18) entre la transition (12, 14) et le second flanc (9) de rainure n'est radialement pas éloignée de plus de 20% de la profondeur de la rainure transversale ou oblique (3) par rapport à l'extrémité radialement interne et à l'extrémité radialement externe (16, 17) de la saillie (8).

7. Bande de roulement (1) selon l'une des revendications 1 à 6, **caractérisée en ce que** le premier flanc (9) de rainure est agencé au niveau d'une arête (11*) de bloc entrant.

8. Bande de roulement (1) selon l'une des revendications 1 à 7, **caractérisée en ce que** la saillie (8) s'étend sur une section continue d'au moins 5 mm le long d'une étendue longitudinale de la rainure transversale ou oblique (3).

9. Bande de roulement (1) selon la revendication 8, **caractérisée en ce que** la saillie (8) s'étend sur un niveau radial constant.

10. Bande de roulement (1) selon la revendication 6 et la revendication 8, **caractérisée en ce que** la limite radiale (18) entre la transition (12, 14) et le second flanc (9) de rainure d'une part et la saillie (8) d'autre part changent, le long de l'étendue longitudinale de la rainure transversale ou oblique (3), qualitativement et de préférence également quantitativement, de manière correspondante, en ce qui concerne leur niveau radial respectif, le changement du niveau radial pouvant en particulier se faire sous forme sinusoïdale ou en zigzag, dans quel cas il existe un changement qualitativement correspondant lors d'une égalité de phase et un changement quantitativement correspondant lors d'une égalité d'amplitude supplémentaire.

11. Bande de roulement (1) selon l'une des revendications 8 à 10, **caractérisée en ce qu'**une autre saillie s'étend, outre la saillie (8) sur une autre section continue le long du premier flanc (9) de rainure, les sections le long de l'étendue longitudinale de la rainure transversale ou oblique (3) ne se chevauchant pas.

12. Bande de roulement (1) selon la revendication 11, **caractérisée en ce que** les deux sections le long de l'étendue longitudinale de la rainure transversale ou oblique sont écartées l'une de l'autre d'entre 1 mm et 5 mm.

13. Bande de roulement (1) selon l'une des revendications 1 à 12, **caractérisée en ce que** la rainure transversale ou oblique (3) est une rainure oblique (3) s'étendant entre un premier épaulement et une zone de l'équateur du pneumatique, la rainure oblique (3) décrivant, conjointement avec une autre rainure oblique (3), une forme de V enjambant axialement la bande de roulement (1) depuis le premier épaulement à un second épaulement.

14. Bande de roulement (1) selon l'une des revendications 1 à 13, **caractérisée en ce que** la saillie (8) est agencée dans une section centrale axiale de la bande de roulement (1).
